Europäisches Patentamt

European Patent Office

Office européen des brevets

(11) Publication number: **0 429 206 A2**

# EUROPEAN PATENT APPLICATION

(21) Application number: 90312059.0

(22) Date of filing: 02.11.90

(51) Int. Cl.⁵: **B29C 51/16**, B29C 51/12, B32B 3/24, H02G 15/10

(30) Priority: 03.11.89 GB 8924827

(43) Date of publication of application:
29.05.91 Bulletin 91/22

(84) Designated Contracting States:
AT BE CH DE DK ES FR GB IT LI LU NL SE

(71) Applicant: **BICC Public Limited Company**
**Devonshire House Mayfair Place**
**London W1X 5FH(GB)**

(72) Inventor: **Armson, Peter**
**22 Dearham Avenue, Haresfinch St. Helens**
**Merseyside(GB)**

(74) Representative: **Poole, Michael John et al**
**BICC plc Group Patents & Licensing Dept.**
**Network House 1, Ariel Way Wood Lane**
**London W12 7SL(GB)**

(54) **Electric cable joint shells and other articles, and methods of making them from sheet materials.**

(57) An electric cable joint shell or other article comprises a layer of foraminous metal sheet material, which is first formed to the required shape. A plastics layer is then conformed to it and made to interlock with it by penetrating into the foramina of the metal sheet; this is done by vacuum forming under a sufficient pressure differential to ensure the necessary penetration.

EP 0 429 206 A2

# ELECTRIC CABLE JOINT SHELLS AND OTHER ARTICLES, AND METHODS OF MAKING THEM FROM SHEET MATERIALS

This invention relates generally to articles made from sheet materials, and more particularly to articles formed with relatively shallow recesses; it is especially, but not exclusively, concerned with shells for electrical (and optical) cable joints. It is also concerned with a method of making such articles.

Plastics cable joint shells have largely displaced metal ones on account of ease of fabrication, light weight and inherent resistance to corrosive environments; but their mechanical strength may be limited, particularly at high temperatures, and performance under fire conditions may be less good than that of the cables they are used with, even if plastics metals designed for good flame retardance and low smoke and fire evolution are used.

The present invention provides joint shells and other articles in which strength and fine performance are improved without reintroducing the disadvantages of a wholly metal structure.

The article in accordance with the invention comprises a first layer formed by shaping foraminous metallic sheet material and a second layer formed from plastics sheet material which conforms to the first layer and is mechanically interlocked with it by penetrating the foramena thereof.

The foraminous metal sheet may be an open woven mesh of wires or strips or a sheet perforated by punching, drilling or the like; however, an "expanded" metal sheet formed by slitting and stretching without removal of metal is preferred on grounds of ease of shaping, good interlocking characteristics and low cost. Aluminium and its common alloys are preferred but other appropriate metals (e.g. copper and its alloys, such as brass or bronze, or tinned or galvanised steel) could be used.

The plastics layer, which will usually be the outer layer (at least in cable jointing application) may be of any suitable plastics sheet material; "LSF" fire retardant compositions filled with magnesium hydroxide, alumina trihydrate, or other materials that evolve water on exposure to fire conditions are preferred; intumescent materials can also be used

In accordance with another aspect of the invention, the article described is made by first forming the metal layer to the required shape and then conforming the plastics layer to it by vacuum-forming under a sufficient pressure differential to provide the required mechanical interlock between the layers.

Additional rigidity and fire retardance can be obtained, at least in some cases, by forming a second foraminous metal sheet into superficial contact with the article described and then vacuum-forming a second plastics layer onto it under a sufficient pressure differential to provide both interlock with the second foraminous metal sheet and bonding contact between the two plastics layers.

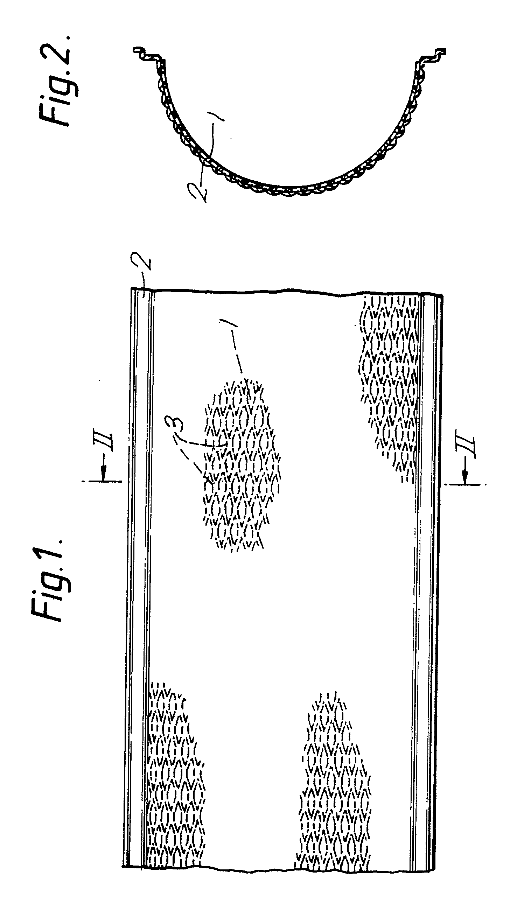

The invention will be further described, by way of example, with reference to the accompanying drawings in which Figure 1 is an underneath plan view of the central section of the lower half of an electrical cable joint shell in accordance with the invention and Figure 2 is a cross-section on the line II -II in Figure 1. The half-shell includes an inner layer 1 made from a rectangular piece of expanded aluminium sheet, by rolling it to a semi-cylindrical shape and then shaping the ends to produce a suitable taper by deforming the sheet to reduce the sizes of at least some of the openings, with or without trimming the corners of the rectangle. The foraminous metal sheet so preformed is then inserted into a conventional vacuum forming mould and a sheet of plastics material vacuum formed into contact with it using a pressure differential sufficient to obtain mechanical interlock where the plastics sheet is deformed to enter into the foramena 3 in the metal layer. If desired, the metal sheet can be preheated to avoid chilling the plastic sheet at the point of contact.

Example

An electric cable joint shell is made from an expanded-metal sheet of 99% aluminium and an LSF plastics sheet.

The metal sheet is 1.14mm thick and is slitted and stretched to form a multiplicity of diamond shaped openings measuring about 24. 15mm long by 6. 68mm wide. This is rolled and pressed to form a simple shell shape comprising a central semi-cylindrical part with a length of 1200mm and a diameter of 200mm and tapered end-parts each reducing to about 140mm diameter about 125mm from the adjacent end of the semi-cylindrical part.

The plastics sheet comprises, in parts by weight:

| Alumina trihydrate (BA Chemicals SF 7E) | 275 |
|---|---|
| Ethylene-propylene Rubber (Exxon Vistalon 370B) | 45 |
| Ethylene/vinyl acetate coplymer (Autochem Evatane 2805) | 35 |
| Polyethylene (BP Chemicals BPD 2145) | 20 |
| Processing Aid (Exxon Escorez 2 1202B) | 15 |
| Silane Coupling Agent (Dow Corning Z6070) | 55 |
| Antioxidant (Monsanto Flectol H) | 3 |
| Pigment (Chromophthal BRN) | 3 |

and is in sheet 2.5mm thick.

The shaped metal component is positioned in a conventional vacuum-forming machine and formed onto the metal component at a nominal temperature of 125-130°C and a nominal pressure of 25 inches of mercury. This conforms the plastic material to the general shape of the metal component (and shapes end parts projecting beyond the end of the metal to give the customary stepped ends for fitting multiple cable sizes) and draws the material sufficiently into the openings to provide a sound mechanical interlock.

**Claims**

1. An article made from sheet material comprising a first layer formed by shaping foraminous metallic sheet materials and a second layer formed from plastics sheet materials which conforms to the first layer characterised in that the second layer is mechanically interlocked with it by penetrating the foramena thereof.

2. An article as claimed in Claim 1 in which the metallic sheet material is an expanded metal sheet.

3. The use of an article as claimed in Claim 1 or Claim 2 as an electric cable joint shell.

4. An electric cable joint shell in accordance with Claim 1 or Claim 2 in which the plastics sheet material is of an "LSF" fire retardent composition filled with magnesium hydroxide, alumina trihydrate or other material that evolves water on exposure to fire conditions.

5. An electric cable joint shell in accordance with Claim 1 or Claim 2 in which the plastics sheet material is intumescent.

6. An electric cable joint shell or other article as claimed in any one of claims 1-4 or 6-7 having a second foraminous metal sheet formed into superficial contact with it and a second plastics layer so vacuum-formed into engagement with the said second foraminous metal sheet that it both interlocks with it by entering the foraminous thereof and is in bonding contact with the first said plastics layer.

7. A method of making an article from sheet materials comprising first shaping a foraminous metallic sheet material to the required shape and then conforming a plastics layer to it by vacuum forming under a sufficient pressure differential to provide mechanical interlock through penetration of the plastics material into the foramena of the metallic sheet material.

8. A method as claimed in Claim 7 in which the foraminous metal sheet is of expanded metal.

9. A method is claimed in Claim 7 or Claim 8 comprising the further steps of forming a second foraminous metal sheet into superficial contact with the article so far formed and then vacuum-forming a second plastics layer onto it under a sufficient pressure differential to provide both interlock with the second foraminous metal sheet and bonding contact between the two plastics layers.

Fig.1.

Fig.2.

EP 0 429 206 A2